# EUROPÄISCHE PATENTSCHRIFT

(11) **EP 1 378 466 B1**
(45) Veröffentlichungstag und Bekanntmachung des Hinweises auf die Patenterteilung: **20.04.2005**
(21) Anmeldenummer: 03014619.5
(22) Anmeldetag: 26.06.2003
(51) Int. Cl.: B65G 39/07

(54) **Rollenantriebseinheit**
Roller-driving unit
Unité d'entraînement pour rouleaux

(30) Priorität: 01.07.2002 DE 10229539
(43) Veröffentlichungstag der Anmeldung: 07.01.2004
(73) Patentinhaber: Telair International GmbH, 83714 Miesbach (DE)
(72) Erfinder: Huber, Thomas, 83727 Schliersee (DE)
(74) Vertreter: Bohnenberger, Johannes, Dr.

(56) Entgegenhaltungen:
- DE-B- 1 203 146
- FR-A- 901 892
- US-A- 5 025 915

## Beschreibung

Die Erfindung betrifft eine Rollenantriebseinheit nach dem Oberbegriff des Patentanspruches 1.

Derartige Rollenantriebseinheiten zur Beförderung von Frachtstücken in einem Flugzeugladeraum sind in einer Vielzahl von Ausführungsformen beispielsweise aus der DE 41 02 424 oder der US 3,712,454 bekannt.

Ein wesentliches Problem bei Flugzeugausrüstungen besteht darin, dass Wartungs- oder Auswechselzeiten enorme Kosten verursachen. Dies trifft insbesondere für die Ladebereiche von Flugzeugen zu. Erschwerend kommt hinzu, dass in diesen Bereichen extrem raue Umweltbedingungen und auch harte Betriebsbedingungen bestehen, da in verschiedensten Klimazonen immer mit möglichst großer Geschwindigkeit und darum sehr oft geringer Sorgfalt gearbeitet wird. Die Frachtstücke, die mit derartigen Rollenantriebseinheiten verladen werden, werden nicht nur immer wieder im Bodenbereich durch den harten Umgang beschädigt, so dass auf den Mantel einer jeden Rollenantriebseinheit punktuell schneidende oder kratzende Kräfte einwirken können. Es werden auch die Antriebsrollen bzw. der darauf sitzende Mantel aus verschiedenen Richtungen, insbesondere beim Drehen eines Containers im Laderaum belastet. Darüber hinaus treten auch erhöhte Temperaturen auf und zwar insbesondere dann, wenn die Antriebsrolle durchrutscht, was beim (selbsttätigen) Hochschwenken der Antriebsrollen mit darüber befindlichem Frachtstück oder auch beim Blockieren eines Frachtstückes leicht geschehen kann.

Aufgrund der hohen Belastungen, denen die Antriebsrollen ausgesetzt sind, kommt es schon nach relativ kurzen Betriebszeiten von 1 bis 2 Jahren zu einem Ausreißen des Belags bzw. des Mantels. Es wird der Mantel also nicht allmählich abgenützt, so dass man nach (hinreichend) langer Benutzungsdauer die Antriebsrollen auswechseln kann. Es treten vielmehr abrupte Schädigungen auf, die bis hin zur Funktionslosigkeit der Antriebsrollen führen können.

Auch der Versuch, die genannten Probleme durch verschleißfestere, stabilere Mantelmaterialien zu lösen, ist fehlgeschlagen, da die Antriebsrollen nur mit einer begrenzten Kraft an die Frachtstücke gepresst werden können und das Material zur Gewährleistung eines hinreichend hohen Reibschlusses relativ weich sein muss.

Ausgehend vom oben genannten Stand der Technik ist es Aufgabe der vorliegenden Erfindung, eine Rollenantriebseinheit der eingangs genannten Art dahingehend weiter zu bilden, dass bei unveränderten Traktionseigenschaften eine erhöhte Betriebsleistung sichergestellt wird.

Diese Aufgabe wird durch eine Rollenantriebseinheit zur Beförderung von Frachtstücken in einem Flugzeugladeraum mit einem Antriebsmotor, der mit einer um die Längsachse drehbaren Antriebsrolle gekoppelt ist, die einen Kern und einen darauf befestigten Mantel mit einer Außenfläche umfasst, welcher mit einem Boden eines Frachtstückes in reibschlüssigen Eingriff zu dessen Beförderung bringbar ist, dadurch gelöst, dass der Mantel mindestens eine Begrenzungsschicht aufweist, die derart ausgebildet und zwischen mindestens einer inneren Mantelschicht und einer äußeren Mantelschicht angebracht ist, dass einerseits die Mantelschichten fest miteinander verbunden sind und andererseits eine Ausbreitung eines Risses von der einen in die andere Mantelschicht begrenzt wird.

Ein wesentlicher Punkt der Erfindung liegt also darin, dass ein im wesentlichen immer wieder und unvermeidbar auftretender Riss nicht zu einem völligen Ausbrechen der gesamten Mantelfläche, sondern nur zu einem Abtrennen von Teilstücken führen kann. Es stellt also gemäß der vorliegenden Erfindung die Begrenzungsschicht keine Verstärkungsschicht im eigentlichen Sinne dar, da weder die Manteloberfläche, welche in reibschlüssigem Eingriff mit den zu befördernden Frachtstücken kommt, noch die Stabilität der Schicht insgesamt oder deren Halt auf dem Kern durch die Begrenzungsschicht beeinflusst werden.

Die Mantelschichten sind vorzugsweise konzentrisch zur Außenfläche der Antriebsrolle ausgebildet, so dass ein symmetrischer Aufbau entsteht. Alternativ ist es möglich und insbesondere beim Vorsehen einer Vielzahl von Begrenzungsschichten zwischen einer Vielzahl von Mantelschichten, den Belag für die Antriebsrolle, also den gesamten Mantel als Band, umfassend eine Begrenzungsschicht und eine Mantelschicht (oder ganzzahlige vielfache hiervon) auszubilden, auf einen Kern zu wickeln und abschließend konzentrisch zum Kern zu formen (zu polymerisieren bzw. zu vulkanisieren).

Die Begrenzungsschicht weist vorzugsweise Öffnungen, Poren oder dergleichen Durchbrechungen auf, durch welche hindurch Material der angrenzenden Mantelschichten miteinander in direkter Verbindung treten kann. Wichtig ist hierbei der Aufbau derart, dass ein Trennen der Mantelschichten voneinander trotz Zwischenlage der Begrenzungsschicht praktisch unmöglich gemacht wird, wobei die Öffnungen/Poren derart groß ausgebildet sein müssen, dass eben dieser Halt der Mantelschichten aneinander gewährleistet ist und dennoch die "Rissbegrenzende" Wirkung der Begrenzungsschicht erhalten bleibt.

Die Begrenzungsschicht kann in vielfältiger Form ausgebildet sein. Besonders einfach ist die Ausbildung der Begrenzungsschicht als Gewebe mit einer relativ groben Struktur derart, dass die genannte Materialverbindung der Mantelschichten untereinander gewährleistet bleibt. Insbesondere ist dies bei einem einlagigen Gewebe relativ leicht möglich.

Wenn man eine Vielzahl derartiger Begrenzungsschichten vorsieht und zwar vorzugsweise in im wesentlichen aequidistanten Lagen, so können trotz normalem, den Durchmesser verringernden Verschleiß über eine erhebliche Betriebsdauer hinweg die Wirkung der Erfindung erhalten bleiben, Ausrisse der Mantelschichten also begrenzt werden. Die durch Abrasion freigelegten Begrenzungsschichten können dann während der Benutzung abgerieben und eine "frische" Mantelschicht darunter freigelegt werden. Es ist auch möglich, im Rahmen einer Wartung der Rollenantriebseinheit die Antriebsrollen zu "überdrehen", also eine definierte Schichtabtragung vorzunehmen.

Eine weitere Möglichkeit, die eingangs beschriebenen Ausrisse von hinreichend elastisch-weichem Mantelmaterial auf ein erträgliches Maß zu begrenzen, kann dadurch bewerkstelligt werden, dass zu den Begrenzungsschichten sich in Richtung der Längsachse und/oder radial zur Längsachse erstreckende Begrenzungswände in den Materialschichten vorgesehen und derart ausgebildet sind, dass Bereiche der Mantelschichten durch die Begrenzungswände miteinander fest verbunden sind. Es dreht sich also auch hier wiederum um die Idee, auf der einen Seite hinreichend elastisches Mantelmaterial zu verwenden, bei welchem Rissbildungen durch besondere Belastungsarten (Schnitte oder dergleichen) praktisch unvermeidbar sind, durch das Vorsehen von Begrenzungswänden (Begrenzungsschichten) die auftretenden Risse "abzufangen" bzw. ausbrechende Mantelmaterialbereiche zu begrenzen. Die Begrenzung erfolgt in diesem Fall aber nicht in Richtung von außen nach innen, auf die Längsachse der Antriebsrolle zu, sie erfolgt vielmehr in Oberflächenbereichen, also in Bereichen der Mantelfläche entlang der Längsachse und/oder rings um den Mantel. Die für die Begrenzungsschichten oben beschriebenen Merkmale und besonderen Ausführungsformen gelten auch hier.

Insgesamt werden hier vorzugsweise die Mantelschichten aus Gummi oder dergleichen vulkanisierbarem Material bzw. aus polymerisierendem Material hergestellt, wie dies an sich bekannt ist.

Verfahrensmäßig werden die Mantelschichten vorzugsweise aus un- bzw. vorpolymerisiertem Gummi als Flächenelemente hergestellt, auf den Kern gewickelt (mit den Begrenzungsschichten zwischen Mantelschichten) und dann in einer Form (heiß) ausvulkanisiert. Es ist hierbei möglich, in mehreren Lagen zu wickeln, so dass eine spiralförmige Anordnung der Begrenzungsschicht entsteht. Wichtig hierbei ist natürlich, dass der Außenumfang im Endeffekt absolut zylindrisch und koaxial zum Kern geformt und in dieser Form durch die anschließende Vulkanisierung/Polyrnerisierung fixiert wird.

Nachfolgend wird eine bevorzugte Ausführungsform der Erfindung anhand von Abbildungen näher erläutert. Hierbei zeigen
- Figur 1: eine perspektivische Darstellung einer Antriebsrolle mit teilweise aufgeschnittenem Mantel,
- Figur 2: einen Teilschnitt durch zwei aneinander grenzende Mantelschichten mit dazwischenliegender Begrenzungsschicht und
- Figur 3: eine perspektivische Teilschnitt-Darstellung zur Erläuterung von Begrenzungswänden.

In der nachfolgenden Beschreibung werden für gleiche und gleichwirkende Teile die selben Bezugsziffern verwendet.

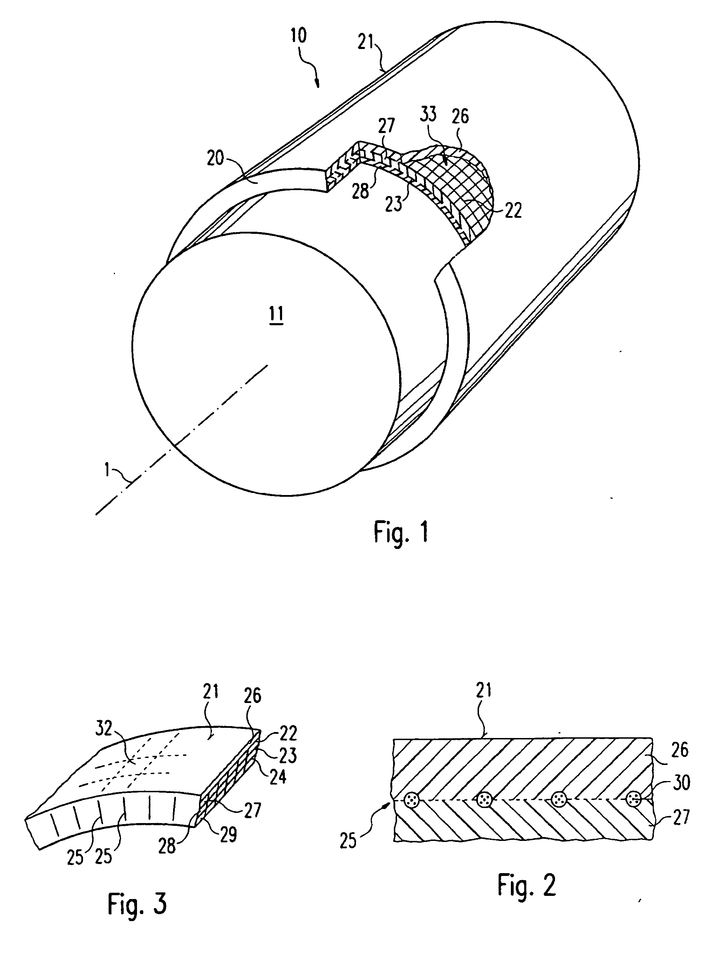

Wie in Figur 1 gezeigt umfasst eine um eine Längsachse 1 drehbare Antriebsrolle 10 einen Kern 11 und einen darauf befestigten, insbesondere aufvulkanisierten Mantel 20 aus Gummi. Eine Außenfläche 21 des Mantels 20 gelangt beim Transport von Frachtstücken mit deren Unterseite mit reibschlüssigen Kontakt, wie dies aus dem Stand der Technik bekannt ist.

Der Mantel 20 umfasst bei dem hier genannten Ausführungsbeispiel eine innerste Mantelschicht 28, die direkt auf den Kern 11 aufvulkanisiert ist. Auf der innersten Mantelfläche liegt eine innere Begrenzungsschicht 23, auf der wiederum eine innere Mantelschicht 27 liegt. Auf der inneren Mantelschicht 27 liegt eine weitere Begrenzungsschicht 22, auf welcher eine äußere Mantelschicht 26 liegt, deren vom Kern 11 abgewandte Fläche die Außenfläche 21 bildet.

Die Mantelschichten 26, 27, 28 und 29 (diese ist nur in Figur 3 gezeigt) sind, wie dies in Figur 2 versucht wurde, zu veranschaulichen, so miteinander verbunden, dass das Material der jeweiligen Mantelschichten 26 bis 29 ineinander übergeht. Dies geschieht in an sich bekannter Weise durch Vulkanisieren von Gummimaterial bzw. Auspolymerisieren von Kunststoffmaterial.

Zwischen den Mantelschichten 27 bis 29 sind Begrenzungsschichten 22 bis 24 angeordnet, die bei dem hier gezeigten Beispiel aus einem groben, Sackleinen - oder rupfenartigen Gewebe bestehen können, welches aus Fäden 20 gewebt ist. Selbstverständlich ist es auch möglich, diese Schicht in einer anderen Technologie herzustellen, wobei es immer darauf ankommt, eine Struktur zu erhalten, die - wie in Figur 1 gezeigt - eine Vielzahl von Öffnungen 33 aufweist, so dass die Mantelschichten 26 bis 29 fest miteinander verbunden werden können. Die Begrenzungsschichten 22 bis 24 bilden somit keine Verstärkung des Mantelmaterials im eigentlichen Sinne, sie dienen vielmehr ausschließlich dazu, das. Wandern von Rissen von der Außenfläche 21 in Richtung auf den Kern 11 zu verhindern bzw. zu begrenzen. Als Material für die Fäden 20 kann Textilmaterial, insbesondere aber auch Kohlenstoff-Fasermaterial verwendet werden. Es ist auch möglich, monofilamente Gitterstrukturen als Begrenzungsschichten 22 bis 24 zu verwenden.

Bei der in Figur 3 gezeigten Ausführungsform sind neben den Begrenzungsschichten 22 bis 24 auch in radialer Richtung und in Umfangsrichtung zum Kern 11 bzw. dessen Längsachse 1 angeordnete Begrenzungsflächen 25 vorgesehen, so dass umgrenzte Bereiche 32, wie in Figur 3 durch die unterbrochenen Linien angedeutet, entstehen. Durch diese Begrenzungsflächen 25 wird somit eine Ausbreitung von Rissen und Brüchen parallel zur Außenfläche 21, also sowohl in Umfangsrichtung als auch in Richtung der Längsachse 1 auf die umgrenzten Bereiche 32 begrenzt. Das Ablösen größerer Flächenbereiche ist somit wirksam verhindert.

Aus obiger Beschreibung ist ersichtlich, dass selbst bei Verwendung von relativ weichem, elastischem und darum gute Friktionseigenschaften für die Antriebsrolle bietenden Mantelmaterial die Haltbarkeit der Antriebsrolle 10 erhöht werden kann.

### Bezugszeichenliste

- 1: Längsachse
- 10: Antriebsrolle
- 11: Kern
- 20: Mantel
- 21: Außenfläche
- 22: Begrenzungsschicht
- 23: Begrenzungsschicht
- 24: Begrenzungsschicht
- 25: Begrenzungsfläche
- 26: Äußere Mantelschicht
- 27: Innere Mantelschicht
- 28: Innere Mantelschicht
- 29: Innere Mantelschicht
- 30: Faden
- 32: Umgrenzter Bereich
- 33: Öffnung

## Patentansprüche

1. Rollenantriebseinheit zur Beförderung von Frachtstücken in einem Flugzeugladeraum, mit einem Antriebsmotor, der mit einer um eine Längsachse (1) drehbaren Antriebsrolle (10) gekoppelt ist, die einen Kern (11) und einen darauf befestigten Mantel (20) mit einer Außenfläche (21) umfasst, welcher mit einem Boden eines Frachtstücks in reibschlüssigen Eingriff zu dessen Beförderung bringbar ist,
**dadurch gekennzeichnet, dass**
der Mantel (20) mindestens eine Begrenzungsschicht (22 - 24) aufweist, die derart ausgebildet und zwischen mindestens einer inneren Mantelschicht (27 - 29) und einer äußeren Mantelschicht (26) angebracht ist, dass einerseits die Mantelschichten (26 - 29) fest miteinander verbunden sind und andererseits eine Ausbreitung eines Risses von der einen Mantelschicht (26, 27, 28) in die andere Mantelschicht (27, 28, 29) begrenzt wird.

2. Rollenantriebseinheit nach Anspruch 1,
**dadurch gekennzeichnet, dass**
die Mantelschichten konzentrisch zur Außenfläche (21) ausgebildet sind.

3. Rollenantriebseinheit nach einem der vorherigen Ansprüche,
**dadurch gekennzeichnet, dass**
die Begrenzungsschicht (22 - 24) Öffnungen, Poren oder dergleichen Durchbrechungen (33) aufweist, durch welche hindurch Material der angrenzenden Mantelschichten (27 - 29) miteinander in direkter Verbindung treten kann.

4. Rollenantriebseinheit nach einem der vorherigen Ansprüche,
**dadurch gekennzeichnet, dass**
die Begrenzungsschicht (22 - 24) ein insbesondere grobes Gewebe umfasst.

5. Rollenantriebseinheit nach einem der vorherigen Ansprüche, insbesondere nach Anspruch 4,
**dadurch gekennzeichnet, dass**
das Gewebe 1-lagig ist.

6. Rollenantriebseinheit nach einem der vorherigen Ansprüche,
**dadurch gekennzeichnet,dass**
eine Vielzahl von Begrenzungsschichten (22 - 24) in vorzugsweise im wesentlichen äquidistanten Lagen vorgesehen ist.

7. Rollenantriebseinheit nach einem der vorherigen Ansprüche,
**dadurch gekennzeichnet, dass**
zusätzlich zu den Begrenzungsschichten (22 - 24) sich in Richtung der Längsachse (1) und/oder radial zur Längsachse (1) erstreckende Begrenzungsflächen (25) nach Art von Wänden in den Mantelschichten (27 - 29) vorgesehen und derart ausgebildet sind, dass Bereiche (32) der Mantelschichten (26 - 29) durch die Begrenzungsflächen (25) miteinander fest verbunden sind.

8. Rollenantriebseinheit nach einem der vorherigen Ansprüche,
**dadurch gekennzeichnet, dass**
die Mantelschichten (26 - 29) aus Gummi oder dergleichen vulkanisierbarem oder polymerisierbarem Material bestehen.

9. Rollenantriebseinheit nach einem der vorherigen Ansprüche,
**dadurch gekennzeichnet, dass**
die Mantelschichten (26 - 29) aus Einzellagen mit dazwischen eingebrachten Begrenzungsschichten (22 - 24) auf den Kern (11) aufgewickelt und anschließend unter Durchdringung der Begrenzungsschichten (22 - 24) miteinander verbunden, insbesondere durch Vulkanisieren verbunden sind.

## Claims

1. A roller drive unit for conveying packages into the cargo hold of an aircraft, with a drive motor which is coupled to a drive roller (10) which is rotatable about a longitudinal axis (1) and which comprises a core (11) and a casing (20) mounted thereon, the casing having an outer surface (21) which can be brought into frictional engagement with a base of a package for the conveyance of the latter, **characterised in that**
the casing (20) has at least one boundary layer (22-24) which is so formed and is fitted between at least one inner casing layer (27-29) and an outer casing layer (26) that, on the one hand, the casing layers (26-29) are securely joined together and, on the other hand, any spreading of a crack from one casing layer (26,27,28) into the other casing layer (26,27,28) is limited.

2. A roller drive unit according to Claim 1, **characterised in that** the casing layers are formed concentrically to the outer surface (21).

3. A roller drive unit according to either one of the preceding Claims, **characterised in that** the boundary layer (22-24) has openings, pores or similar perforations, through which material of the adjoining casing layers (27-29) can enter into direct connection with one another.

4. A roller drive unit according to any one of the preceding Claims, **characterised in that** the boundary layer (22-24) comprises an especially coarse fabric.

5. A roller drive unit according to any one of the preceding Claims, in particular Claim 4, **characterised in that** the fabric is single-ply.

6. A roller drive unit according to any one of the preceding Claims, **characterised in that** a plurality of boundary layers (22-24) is provided, in preferably substantially equidistant plies.

7. A roller drive unit according to any one of the preceding Claims, **characterised in that**, in addition to the boundary layers (22-24), boundary surfaces (25) extending in the direction of the longitudinal axis (1) and/or radially to the longitudinal axis (1) are provided in the manner of walls in the casing layers (27-29) and are so formed that areas (32) of the casing layers (26-29) are securely joined together by the boundary surfaces (25).

8. A roller drive unit according to any one of the preceding Claims, **characterised in that** the casing layers (26-29) consist of rubber or similar material which can be cured or polymerised.

9. A roller drive unit according to any one of the preceding Claims, **characterised in that** the casing layers (26-29) consisting of single plies with boundary layers (22-24) inserted between them are wound on to the core (11) and are subsequently joined together by penetrating the boundary layers (22-24), in particular are joined by curing.

## Revendications

1. Unité d'entraînement à rouleaux destinée à acheminer des colis dans un espace de chargement d'un avion, comportant un moteur d'entraînement qui est couplé à un rouleau entraîneur (10) pouvant pivoter autour d'un axe longitudinal (1), qui comprend un mandrin (11) et une enveloppe (20) qui est fixée dessus et présente une surface externe (21) qui peut être amenée en prise par friction avec un fond d'un colis pour son transport,
**caractérisée en ce que** l'enveloppe (20) présente au moins une couche de limitation (22-24) qui est réalisée et appliquée entre au moins une couche d'enveloppe interne (27-29) et une couche d'enveloppe externe (26) de sorte que, d'une part, les couches d'enveloppe (26-29) sont reliées fermement entre elles et que, d'autre part, on limite une extension d'une fissure de la première couche d'enveloppe (26, 27, 28) dans l'autre couche d'enveloppe (27, 28, 29).

2. Unité d'entraînement à rouleaux selon la revendication 1, **caractérisée en ce que** les couches d'enveloppe sont réalisées de façon concentrique vers la surface externe (21).

3. Unité d'entraînement à rouleaux selon l'une des revendications précédentes, **caractérisée en ce que** la couche de limitation (22-24) présente des ouvertures, des pores ou des passages équivalents (33), par lesquels des matériaux des couches d'enveloppe adjacentes (27-29) peuvent être en relation directe les uns avec les autres.

4. Unité d'entraînement à rouleaux selon l'une des revendications précédentes, **caractérisée en ce que** la couche de limitation (22-24) comprend un tissu, en particulier à macrostructure.

5. Unité d'entraînement à rouleaux selon l'une des revendications précédentes, en particulier selon la revendication 4, **caractérisée en ce que** le tissu est à une seule couche.

6. Unité d'entraînement à rouleaux selon l'une des revendications précédentes, **caractérisée en ce que** l'on prévoit plusieurs couches de limitation (22-24), de préférence en couches essentiellement équidistantes.

7. Unité d'entraînement à rouleaux selon l'une des revendications précédentes, **caractérisée en ce qu'**en plus des couches de limitation (22-24), des surfaces de limitation (25), qui s'étendent dans la direction de l'axe longitudinal (1) et/ou radialement par rapport à l'axe longitudinal (1), à la manière de cloisons dans les couches d'enveloppe (27-29), sont prévues et réalisées de façon telle que des zones (32) des couches d'enveloppe (26-29) sont fermement reliées entre elles par les surfaces de limitation (25).

8. Unité d'entraînement à rouleaux selon l'une des revendications précédentes, **caractérisée en ce que** les couches d'enveloppe (26-29) se composent de caoutchouc ou de matériau équivalent apte à la vulcanisation ou à la polymérisation.

9. Unité d'entraînement à rouleaux selon l'une des revendications précédentes, **caractérisée en ce que** les couches d'enveloppe (26-29) composées de couches uniques sont enroulées sur le mandrin (11) avec des couches de limitation (22-24) appliquées entre elles et sont ensuite reliées ensemble par pénétration des couches de limitation (22, 24), en particulier sont reliées par vulcanisation.
